# EUROPÄISCHE PATENTSCHRIFT

(11) **EP 0 988 778 B1**
(45) Veröffentlichungstag und Bekanntmachung des Hinweises auf die Patenterteilung: **23.01.2002**
(21) Anmeldenummer: 99116098.7
(22) Anmeldetag: 17.08.1999
(51) Int. Cl.: A01C 7/08

(54) **Verteilmaschine**
Distributor
Distributeur

(30) Priorität: 24.09.1998 DE 19843744
(43) Veröffentlichungstag der Anmeldung: 29.03.2000
(73) Patentinhaber: Amazonen-Werke H. Dreyer GmbH & Co. KG, 49205 Hasbergen (DE)
(72) Erfinder: Siefken, Claus, 27777 Ganderkesse (DE); Wulkopf, Carsten, 27798 Hude (DE)

(56) Entgegenhaltungen:
- DE-A- 2 212 769
- DE-A- 3 616 538
- US-A- 4 296 695

## Beschreibung

Die Erfindung betrifft eine Verteilmaschine gemäß des Oberbegriffes des Patentanspruches 1.

Derartige Verteilmaschinen sind vielfach bekannt (siehe z.B. DE-A-2 212 769). Diese Verteilmaschinen weisen einen Vorratsbehälter auf. In dem unteren trichterförmigen Bereich des Vorratsbehälters ist ein Dosierorgan angeordnet, welches das sich im Vorratsbehälter befindliche Material in einstellbaren Mengen in eine Förderleitung dosiert. Dieses Dosierorgan ist als rotierend angetriebenes Zellenrad ausgebildet. Die Zellen des Zellenrades entleeren sich teilweise ungleichmäßig, so daß das Material schubartig in die Förderleitung gelangt.

Der Erfindung liegt die Aufgabe zugrunde, eine möglichst gleichmäßige Einleitung des Saatgutes in die Förderleitung zu erreichen, damit das Material gleichmäßig von der Förderleitung gefördert und den Verteilorganen in gleichmäßiger Weise zugeführt wird.

Diese Aufgabe wird erfindungsgemäß durch die Kennzeichen des Merkmales des Patentanspruches 1 gelöst. Durch diese Vergleichmäßigungsvorrichtung wird das schubartig geförderte Material teilweise abgebremst, so daß ein Vergleichmäßigungseffekt auftritt.

Weitere Einzelheiten der Erfindung sind den Unteransprüchen, der Beispielsbeschreibung und den Zeichnungen zu entnehmen. Hierbei zeigen
- Fig.1: den Dosier- und Einschleusbereich des Materials in die Förderleitung in Seitenansicht und in Prinzipdarstellung und
- Fig.2: die Anordnung der Vergleichmäßigungsvorrichtung in der Ansicht II-II.

Die Verteilmaschine weist den Vorratsbehälter 1 auf, der zumindest in seinem unteren Bereich trichterförmig ausgebildet ist. Dem unteren Bereich des Vorratsbehälters 1 ist das Dosierorgan 2 zugeordnet. Dieses Dosierorgan 2 ist als in Pfeilrichtung 3 angetriebenes und rotierendes Zellenrad 4, wobei die einzelnen Zellen nicht dargestellt sind, ausgebildet. Über das Zellenrad 4 wird das Material in einstellbarer Weise der unterhalb des Dosierorgans 2 angeordneten Schleuse 5 zugeleitet. Diese Schleuse 5 ist Teil einer Förderleitung 6, über welches das Material nicht dargestellten Verteilorganen, wie Verteilerkopf und Säscharen etc. zuführbar ist.

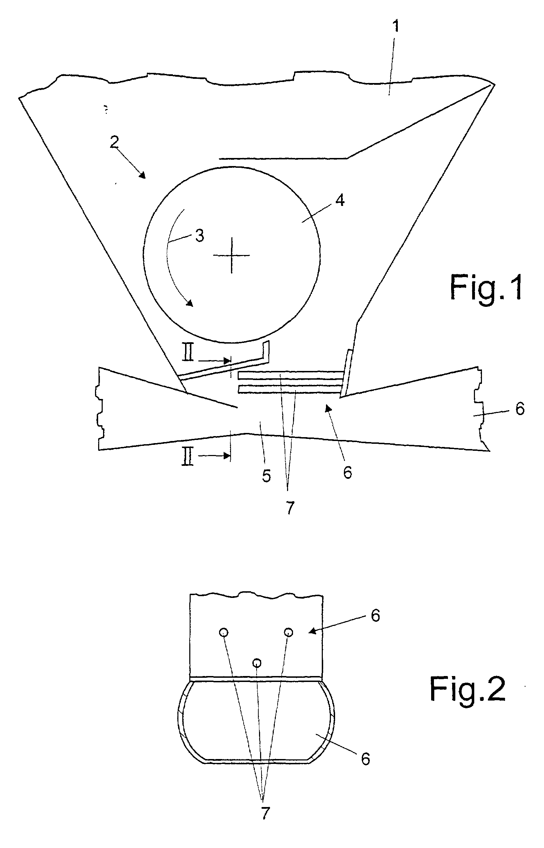

In dem Bereich zwischen dem Dosierorgan 2 und der Schleuse 5 ist die Vergleichmäßigungsvorrichtung 6 angeordnet. Die Vergleichmäßigungsvorrichtung 6 ist als kammähnliche Vorrichtung ausgebildet und weist die Bremsstäbe 7 auf. Die Bremsstäbe 7 sind, wie Fig.2 zu entnehmen ist, beabstandet zueinander angeordnet, wobei der mittlere Stab 7 tiefer als die seitlichen Stäbe 7 angeordnet ist.

Die Funktionsweise der Vergleichmäßigungsvorrichtung 6 ist folgende:

Das aus den Zellen des Zellenrades 4 schubweise herausfließende Material fällt auf die Bremsstäbe 7 der Vergleichmäßigungsvorrichtung 6, so daß ein Teil abgebremst wird und das Material vergleichmäßigt in die Schleuse 5 gelangt, so daß eine gleichmäßige Förderung des Materials mit der Vergleichmäßigungsvorrichtung 6 als ohne diese erreicht wird.

## Patentansprüche

1. Verteilmaschine, vorzugsweise Sämaschine mit einem Vorratsbehälter, von dem aus über ein rotierend angetriebene Zellenräder aufweisendes Dosierorgan das sich im Vorratsbehälter befindliche Material, vorzugsweise Saatgut, über eine Schleuse einer pneumatischen Förderleitung, die das Material zu Verteilorganen fördert, zugeleitet wird, **dadurch gekennzeichnet, daß** zwischen dem Dosierorgan (2) und der Schleuse (5) eine Vergleichmäßigungsvorrichtung (6) angeordnet ist.

2. Verteilmaschine nach Anspruch 1, **dadurch gekennzeichnet, daß** die Vergleichmäßigungsvorrichtung (6) als kammähnliche Vorrichtung ausgebildet ist.

3. Verteilmaschine nach Anspruch 1, **dadurch gekennzeichnet, daß** die Vergleichmäßigungseinrichtung (6) als Bremsstäbe (7) aufweisende Vorrichtung ausgebildet ist.

4. Verteilmaschine nach Anspruch 3, **dadurch gekennzeichnet, daß** die Bremsstäbe (7) beabstandet zueinander angeordnet sind.

5. Verteilmaschine nach Anspruch 4, **dadurch gekennzeichnet, daß** drei Stäbe vorgesehen sind, wobei der mittlere Stab (7) höher oder tiefer als die seitlichen Stäbe (7) angeordnet ist.

## Claims

1. Distributor, preferably a seed drill, having a hopper, from which the material, preferably seeds, situated in the hopper, is conducted to a pneumatic feed pipe via a charging valve and via a metering member, which has rotatingly driven bucket wheels, said feed pipe conveying the material to distributing members, **characterised in that** an evenly distributing means (6) is disposed between the metering member (2) and the charging valve (5).

2. Distributor according to claim 1, **characterised in that** the evenly distributing means (6) is in the form of a comb-like means.

3. Distributor according to claim 1, **characterised in that** the evenly distributing means (6) is in the form of a means which includes retarding bars (7).

4. Distributor according to claim 3, **characterised in that** the retarding bars (7) are disposed with spacings therebetween.

5. Distributor according to claim 4, **characterised in that** three bars are provided, the central bar (7) being disposed higher or lower than the lateral bars (7).

## Revendications

1. Distributeur de préférence semoir comprenant un réservoir d'alimentation à partir duquel un organe de dosage comportant une roue alvéolaire entraînée en rotation, transfère la matière contenue dans le réservoir de préférence des semences par l'intermédiaire d'un sas à une conduite de transfert pneumatique qui débite les produits vers les organes distributeurs,
**caractérisé par**
un dispositif de régularisation (8) prévu entre l'organe de dosage (2) et le sas (5).

2. Distributeur selon la revendication 1.
**caractérisé en ce que**
le dispositif de régularisation (8) est un dispositif en forme de peigne.

3. Distributeur selon la revendication 1,
**caractérisé en ce que**
le dispositif de régularisation (8) est un dispositif comportant des tiges de freinage (7).

4. Distributeur selon la revendication 3,
**caractérisé en ce que**
les tiges de freinage (7) sont écartées les unes des autres.

5. Distributeur selon la revendication 4,
**caractérisé par**
trois tiges à savoir une tige médiane (7) située plus haut ou plus bas que les tiges latérales (7).
